# EUROPEAN PATENT SPECIFICATION

(11) **EP 1 695 899 B1**
(45) Date of publication and mention of the grant of the patent: **26.09.2007**
(21) Application number: 05003973.4
(22) Date of filing: 24.02.2005
(51) Int. Cl.: B62K 19/46

(54) **Article storage container of a motorcycle**
Motorradbehälter zur Aufbewahrung von Gegenständen
Récipient d'articles pour motocyclette

(43) Date of publication of application: 30.08.2006
(73) Proprietor: Kwang Yang Motor Co., Ltd., Kaohsiung (TW)
(72) Inventor: Yu, Cheng-Wen, Tso Ying District Kaohsiung (TW); Su, Chung-Ming, Tso Ying District Kaohsiung (TW)
(74) Representative: Cohausz & Florack

(56) References cited:
- EP-A- 0 303 408
- EP-A- 1 245 442
- FR-A- 2 698 603
- US-A- 4 817 749
- US-A- 4 964 483
- US-A- 5 040 632
- US-A- 5 044 646
- US-A1- 2003 112 633

## Description

The invention relates to a motorcycle comprising a housing, an article storage container adapted to be disposed below a seat of the motorcycle and including a container body that defines an inner space for receiving articles therein, and that has a surrounding wall surrounded by said housing, cooperating with said housing to define an accommodating space therebetween at one side of said motorcycle, and an air filter. Such a motorcycle including an air filter is known from EP 0 303 408 A2.

A similar arrangement is also known from US 5,040,632, which also discloses a motorcycle comprising a housing, an article storage container adapted to be disclosed below a seat of the motorcycle and an air filter.

Conventionally, an air filter of a motorcycle is normally disposed adjacent to a rear wheel of the motorcycle and to an air intake of a carburetor that is close to the ground. Since the air filter and the carburetor are exposed from the housing of the motorcycle, the air filter tends to be blocked quickly by dirt and/or contaminated with stain such as moisture, rain, and oil, which are difficult to clean. Moreover, cleaning or maintenance of the air filter is relatively inconvenient, since the air filter is difficult to reach.

It is therefore an object of the present invention to provide a motorcycle comprising an air filter which allows the maintenance and cleaning of the air filter to be carried out in a more convenient way.

This object is achieved according to the present invention by a motorcycle comprising a housing, an article storage container adapted to be disposed below a seat of the motorcycle and including a container body that defines an inner space for receiving articles therein, and that has a surrounding wall surrounded by said housing, cooperating with said housing to define an accommodating space therebetween at one side of said motorcycle, and an air filter, wherein the container body has a recessed wall that is formed with a side bore for access into said accommodating space, wherein the air filter is mounted in said accommodating space and accessible through said side bore, said filter including a filter housing that defines an opening, a filter material received in said filter housing and accessible through said opening, and a cap for covering said opening, and wherein a cover detachably mounted on the recessed wall of the container body for covering said side bore is provided.

This special arrangement and combination of features allows the air filter to be reached easily, even when the article storage container contains a plurality of articles, since the filter and filter housing are accessible through an opening in the side wall of the article storage container. As a result, even when a plurality of articles lies on the bottom of the storage container, the maintenance and cleaning of the filter is possible without the necessity of removing the articles before. This makes the maintenance and cleaning of the filter relatively convenient.

Other features and advantages of the present invention will become apparent in the following detailed description of the preferred embodiment with reference to the accompanying drawings, of which:
Figure lisa perspective view to illustrate the preferred embodiment of an article storage container of a motorcycle according to the present invention;
Figure 2 is a partly exploded perspective view to illustrate the preferred embodiment in a state where a cover is detached from a recessed wall of the container; and
Figure 3 is a partly exploded perspective view to illustrate the preferred embodiment in a state where an air filter material is detached from an air filter attached to the container.

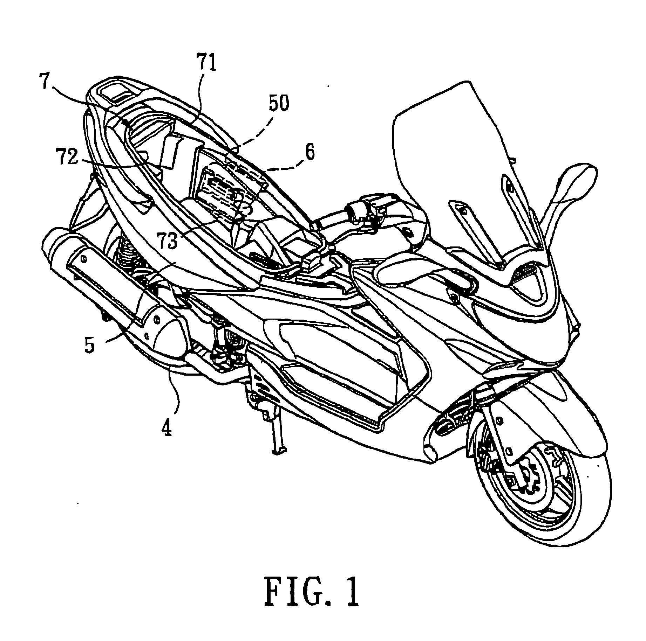

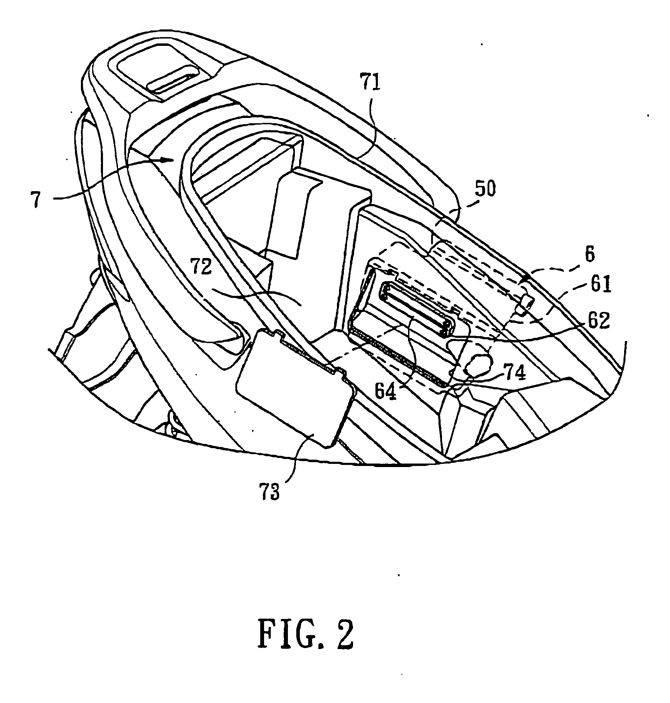

Referring to Figures 1 to 3, an article storage container 7 of a motorcycle is shown to be adapted to be disposed below a seat of the motorcycle that includes a rear wheel and a housing 5 disposed above the rear wheel. The article storage container 7 is surrounded by and cooperates with the housing 5 of the motorcycle to define an accommodating space 50 therebetween for accommodating an air filter 6 therein. The air filter 6 includes a filter housing 61 that has an opening 62, a filter material 63 mounted in the filter housing 61 and accessible through the opening 62, and a cap 64 removably covering the opening 62.

In this embodiment, the article storage container 7 includes a container body 71 and a cover 73. The container body 71 defines an inner space 72 for receiving articles therein, and has a recessed wall that is formed with a bore 74 which is registered with and which is 15 in spatial communication with the opening 62 in the filter housing 61. The cover 73 is detachably mounted on the recessed wall of the container body 71 for covering the bore 74.

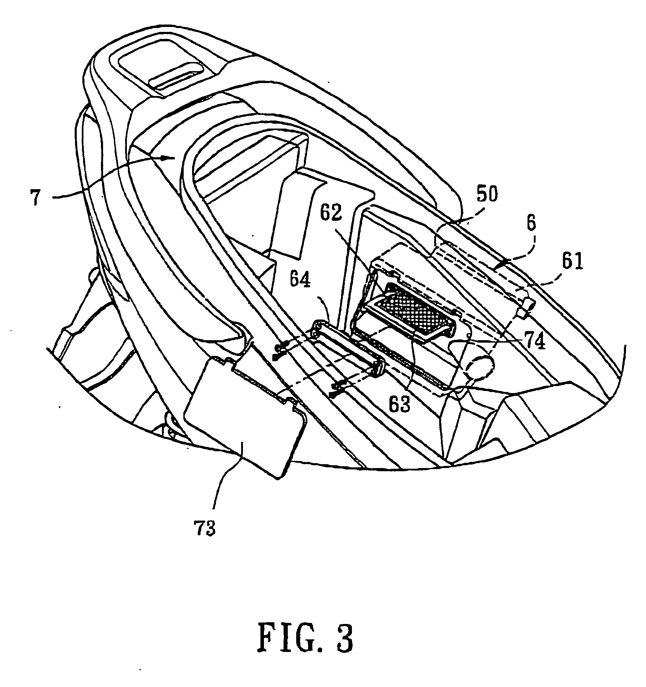

Referring to Figure 3, for maintaining the air filter 20 6, the cover 73 is first detached from the container body 71 so as to expose the cap 64. The cap 64 is then removed so that the filter material 63 can be pulled out through the opening 62 and the bore 74 for subsequent cleaning or replacing operations.

By mounting the air filter 6 in the accommodating space 50, the aforesaid blocking and contamination drawbacks associated with the prior art can be eliminated.

Moreover, access to the air filter 6 through the bore 74 in the recessed wall of the container body 71 is relatively convenient.

## Claims

1. A motorcycle comprising:
a housing (5);
an article storage container (7) adapted to be disposed below a seat of the motorcycle and including a container body (71) that defines an inner space (72) for receiving articles therein, and that has a surrounding wall surrounded by said housing (5), cooperating with said housing (5) to define an accommodating space (50) therebetween at one side of said motorcycle; and
an air filter,
**characterized in that** the container body (71) has a recessed side wall that is formed with a bore (74) for access into said accommodating space (50);
wherein the air filter (6) is mounted in said accommodating space (50) and accessible through said bore (74), said filter including a filter housing (61) that defines an opening (62), a filter material (63) received in said filter housing (61) and accessible through said opening (62), and a cap (64) for covering said opening (62); and
wherein a cover (73) detachably mounted on the recessed side wall of the container body (71) for covering said bore (74) is provided.

## Patentansprüche

1. Motorrad, enthaltend:
ein Gehäuse (5);
einen Lagerbehälter (7) für Gegenstände, der dafür ausgelegt ist, unter einem Sitz des Motorrads angeordnet zu werden und einen Behälterkörper (71) umfasst, der einen Innenraum (72) zur Aufnahme der Gegenstände darin bildet und der eine von dem Gehäuse (5) umgebene Umgebungswand hat, die mit dem Gehäuse (5) zusammenwirkt, um dazwischen an einer Seite des Motorrads einen Aufnahmeraum (50) zu bilden; und
einen Luftfilter,
**dadurch gekennzeichnet, dass**
der Behälterkörper (71) eine Seitenwand mit einer Vertiefung hat, die mit einer Öffnung (74) zum Zugang in den Aufnahmeraum (50) versehen ist;
wobei der Luftfilter (6) in dem Aufnahmeraum (50) montiert ist und durch die Öffnung (74) zugänglich ist, welcher Filter ein Filtergehäuse (61), das eine Öffnung (62) bildet, ein in dem Filtergehäuse (61) aufgenommenes Filtermaterial (63), das durch die Öffnung (62) zugänglich ist, und eine Kappe (64) zum Abdecken der Öffnung (62) umfasst; und
wobei eine Abdeckung (73) vorgesehen ist, die an der Seitenwand des Behälterkörpers (71) zum Abdecken der Öffnung (74) abnehmbar montiert ist.

## Revendications

1. Une motocyclette comprenant:
un carter (5);
un conteneur de rangement d'article (7) adapté pour être disposé sous un siège de la motocyclette et incluant un corps de conteneur (71) qui définit un espace intérieur (72) destiné à recevoir des articles, et dont la paroi est entourée par ledit carter (5), en interaction avec ledit carter (5) de manière à définir entre les deux un espace de logement (50) sur l'un des côtés de ladite motocyclette; et
un filtre à air,
**caractérisée en ce que** le corps du conteneur (71) présente une paroi latérale en creux formée avec une baie d'accès (74) au-dit espace de logement (50);
le filtre à air (6) étant monté dans ledit espace de logement (50) et accessible par ladite baie d'accès (74), ledit filtre incluant un carter de filtre (61) qui définit une ouverture (62), un matériau filtrant (63) placé dans ledit carter de filtre (61) et accessible par ladite ouverture (62), et un couvercle (64) pour fermer ladite ouverture (62); et
une trappe amovible de recouvrement (73) étant monté détachable sur la paroi latérale en creux du corps de conteneur (71) pour fermer ladite baie d'accès (74).
